Europäisches Patentamt

European Patent Office

Office européen des brevets

(11) Publication number: **0 076 126**
**B1**

(12) **EUROPEAN PATENT SPECIFICATION**

(45) Date of publication of patent specification: **22.01.86**

(51) Int. Cl.⁴: **C 08 G 18/67, C 08 G 18/48, C 08 G 18/32, C 08 L 75/08**

(21) Application number: **82305069.5**

(22) Date of filing: **24.09.82**

(54) **Modified polyurethane liquid polymer compositions.**

(30) Priority: **29.09.81 US 306845**
**29.09.81 US 306848**

(43) Date of publication of application:
**06.04.83 Bulletin 83/14**

(45) Publication of the grant of the patent:
**22.01.86 Bulletin 86/04**

(84) Designated Contracting States:
**BE DE FR GB IT NL SE**

(56) References cited:
**EP-A-0 005 549**
**EP-A-0 009 967**
**EP-A-0 051 476**
**EP-A-0 052 958**
**DE-A-2 209 149**
**FR-A-2 391 705**

(73) Proprietor: **OLIN CORPORATION**
**350 Knotter Drive**
**Cheshire Connecticut 06410-0586 (US)**

(72) Inventor: **O'Connor, James Michael**
**8 Kenilworth Drive**
**Clinton Connecticut 06413 (US)**
Inventor: **Lickei, Donald Lee**
**38 Hallmark Drive**
**Wallingford Connecticut 06492 (US)**
Inventor: **Rosin, Michael Lee**
**4 Wilshire Road**
**Madison Connecticut 06443 (US)**

(74) Representative: **Thomas, Roger Tamlyn et al**
**D. Young & Co. 10 Staple Inn**
**London WC1V 7RD (GB)**

Courier Press, Leamington Spa, England.

# 0 076 126

**Description**

This invention relates to a select liquid polymer composition containing a modified polyurethane oligomer having terminal ethylenic unsaturation, a process for preparing a polyurethane polymer product employing the select liquid polymer composition and a polyurethane polymer product prepared according to the process.

More particularly, it has now been discovered, according to the present invention, that a heat curable liquid polymer composition can be prepared comprising a modified polyurethane oligomer containing terminal ethylenic unsaturation and a free radical generating catalyst. Such a composition features the advantages of a one-component storage stable system that requires only heat for activation; the composition is useful in preparing a wide variety of castings, coatings and gel coats.

The present applicants EP—A—0 051 476 discloses a polyurethane liquid polymer composition comprising a urethane oligomer and a heat-activated free-radical-generating catalyst, characterized in that the urethane oligomer has a final free NCO content from 0% to 20% and has been prepared by reacting

(a) an isocyanate-terminated prepolymer having a final free NCO content ranging from 0.5% to 30% and that is the product of reacting an organic polyisocyanate with a polyol having an average equivalent weight in the range 75 to 500 and an average functionality of at least about 3, with

(b) an isocyanate-reactive-group-containing unsaturated acrylate or unsaturated amide monomer.

According to one aspect the invention provides a polyurethane liquid polymer composition comprising a polyurethane oligomer and a heat activatable free radical generating catalyst, said polyurethane oligomer having terminal ethylenic unsaturation and an equivalent ratio of NCO to OH from 0.8/1 to 2/1 and being prepared by simultaneously reacting

(a) an organic polyisocyanate;

(b) a polyether polyol having an average equivalent weight of 75 to 500 and an average functionality of at least 3; and

(c) an isocyanate reactive group-containing unsaturated monomer selected from

(i) (meth)acrylates,

(ii) terminally unsaturated amides, and

(iii) mixtures thereof;

wherein there is employed an equivalent ratio of said isocyanate reactive group-containing unsaturated monomer to said polyol in the range from 0.6/1 to 25/1.

According to another aspect, the invention provides a process for preparing a polyurethane polymer product comprising mixing a polyurethane oligomer and a heat activatable free radical generating catalyst, and then heating said mixture at a temperature adequate to activate said catalyst and cure said mixture, said polyurethane oligomer having terminal ethylenic unsaturation and an equivalent ratio of NCO to OH from 0.8/1 to 2/1 and being prepared by simultaneously reacting ·

(a) an organic polyisocyanate;

(b) a polyether polyol having an average equivalent weight of 75 to 500 and an average functionality of at least 3; and

(c) an isocyanate reactive group-containing unsaturated monomer selected from

(i) (meth)acrylates,

(ii) terminally unsaturated amides, and

(iii) mixtures thereof; and

wherein there is employed an equivalent ratio of said isocyanate reactive group-containing unsaturated monomer to said polyol in the range from 0.6/1 to 25/1.

The polyurethane oligomer that is utilized according to the invention is prepared by simultaneously reacting an organic polyisocyanate, a polyol and an isocyanate reactive group-containing unsaturated monomer. The reaction is carried out using methods well known in the art and employing such relative proportions of the reactants so as to achieve an oligomer product having an equivalent ratio of NCO to OH from 0.8/1 to 2/1, and preferably from 1/1 to 1.2/1. In forming the oligomer, there is also employed an equivalent ratio of isocyanate reactive group-containing unsaturated monomer to polyol in the range from 0.6/1 to 25/1, and preferably from 0.8/1 to 10/1. By reaction of the organic polyisocyanate, polyol and isocyanate reactive group-containing unsaturated monomer, a controlled molecular weight polyurethane oligomer with terminal reactive unsaturation is produced.

Preferably, the reaction is accelerated by employing a catalyst; common urethane catalysts, e.g., tertiary amines and metal compounds such as stannous octoate or dibutyltin dilaurate may be used. Any catalytic amount may be employed; illustratively, such amount varies, depending on the particular catalyst utilized, from about 0.01 to about 1 percent by weight of the polyurethane oligomer. It is also preferred to carry out the reaction in the presence of a reactive copolymerizable solvent. Suitable copolymerizable solvents include vinylidene compounds such as styrene, vinyltoluene, methacrylic esters, acrylic esters and divinylbenzene, familiar to those skilled in the art. The amount of copolymerizable solvent employed may be varied over a wide range. Generally, however, the copolymerizable solvent is employed in an amount of from 0 to 100 parts by weight per 100 parts by weight of the polyurethane oligomer of the present invention.

Any suitable organic polyisocyanate, or mixture of polyisocyanates, may be employed in preparing the

2

polyurethane oligomer. Illustrative are toluene diisocyanate, such as the 80:20 and the 65:35 mixtures of the 2,4- and 2,6-isomers, ethylene diisocyanate, propylene diisocyanate, methylene-bis-(4-phenyl) isocyanate, xylene diisocyanate, 3,3' - bitoluene - 4,4' - diisocyanate, hexamethylene diisocyanate, naphthalene - 1,5 - diisocyanate, the polymeric isocyanates such as polyphenylene polymethylene isocyanate and mixtures thereof. In accordance with a particularly preferred embodiment of the invention, there is employed an isomeric mixture of 2,4- and 2,6-toluene diisocyanate in which the weight ratio of the 2,4-isomer to the 2,6-isomer is from about 60:40 to about 90:10, and more preferably from about 65:35 to about 80:20.

The polyol reactant used in the polyurethane oligomer formation is selected from polyether polyols and mixtures of two or more such compounds. The polyol, or mixture of polyols, should have an average equivalent weight ranging from 75 to 500. Preferably, the average equivalent weight is 100 to 200. The average functionality of the polyol or polyol blend is at least 3, preferably 3 to 8, and most preferably 4 to 6.

Suitable polyether polyols include various polyoxyalkylene polyols and mixtures thereof. These can be prepared, according to well-known methods, by condensing an alkylene oxide, or a mixture of alkylene oxides using random or step-wise addition, with a polyhydric initiator or a mixture of polyhydric initiators. Illustrative alkylene oxides include ethylene oxide, propylene oxide, butylene oxide, amylene oxide, aralkylene oxides such as styrene oxide, and the halogenated alkylene oxides such as trichlorobutylene oxide. The most preferred alkylene oxide is propylene oxide or a mixture thereof with ethylene oxide using random or step-wise oxyalkylation.

The polyhydric initiator used in preparing the polyether polyol reactant includes the following and mixtures thereof: (a) the aliphatic triols such as glycerol, trimethylolpropane, triethylolpropane and trimethylolhexane; (b) higher functionality hydroxy compounds such as sucrose, dextrose, sorbitol, pentaerythritol and methyl glucoside; (c) the polyamines such as tetraethylene diamine; and (d) the alkanolamines such as diethanolamine and triethanolamine.

A preferred group of polyhydric initiators for use in preparing the polyether polyol reactant is one which comprises mixtures of sucrose, dextrose or methyl glucoside with an aliphatic triol, preferably glycerol.

The alkylene oxide-polyhydric initiator condensation reaction is preferably carried out in the presence of a catalyst such as KOH as is well known in the art. In effecting the reaction, a sufficient proportion of alkylene oxide is used as to provide a final polyol product having an average equivalent weight of 75 to 500, preferably 100 to 200. The catalyst is thereafter preferably removed, leaving a polyether polyol which is ready for use in preparing the polyurethane oligomer of the invention.

Suitable isocyanate reactive group-containing unsaturated monomers include acrylates and acrylamides such as hydroxyethyl acrylate, hydroxypropyl acrylate, hydroxyethyl methacrylate, hydroxyethyl acrylamide, hydroxypropyl acrylamide, t-butylaminoethyl methacrylate and mixtures thereof. Acrylates are preferred, with hydroxyethyl acrylate, hydroxypropyl acrylate, and hydroxyethyl methacrylate being the most preferred.

In forming the polyurethane oligomer, it is also preferred to include chain extenders, well known to those in the polyurethane art, in the reaction mixture. These chain extenders include low molecular weight glycols such as ethylene glycol, butane diol, hexane diol, propylene glycol, tripropylene glycol, bisphenol A. Other suitable chain extenders are polyether polyols, or mixtures of polyether polyols, having an average equivalent weight ranging from 200 to 4,000 and an average functionality of about 2. The amount of chain extender employed can vary broadly depending upon the amount of polyol reactant used in preparing the polyurethane oligomer.

The modified polyurethane oligomer liquid polymer system is polymerized and cured in the presence of a heat activated, free radical generating catalyst. The actual curing conditions may vary over wide ranges and are generally dependent on the nature and amount of the particular catalyst employed. Suitable free radical generating catalysts include peroxide or azotype compounds, known to those in the art. Typical peroxide catalysts are illustrated by organo peroxides and hydroperoxides such as benzoyl peroxide, dicumyl peroxide, methyl ethyl ketone peroxide, lauryl peroxide, cyclohexanone peroxide, t-butyl perbenzoate, t-butyl hydroperoxide, t-butylbenzene hydroperoxide, cumene hydroperoxide and t-butyl peroctoate. Typical azo compounds are azobis-isobutyronitrile, 2 - t - butylazo - 2 - cyano - 4 - methylpentane, and 4 - t - butylazo - 4 - cyano - valeric acid. The preferred catalysts are peroxide catalysts. In particular, preferred peroxide catalysts are t-butyl peroctoate, t-butyl perbenzoate, and mixtures thereof. Any suitable catalytic amount may be employed; however, the catalyst generally is used in an amount from about 0.1 to about 10 parts by weight per 100 parts by weight of the polyurethane oligomer.

The composition of the present invention also may include other standard ingredients, if desired, such as internal mold release agents, e.g., calcium, zinc, magnesium, or sodium stearate. Pigments, dyes, stabilizers, viscosity modifiers (e.g., Group II metal oxides and hydroxides, such as magnesium oxide), thixotropes and various other additives familiar to those skilled in the art also may be added.

The polyurethane liquid polymer composition is generally stable over a reasonable period of time, and can be stored usually for at least 2 to about 4 weeks prior to use. The composition can then be cured upon the application of heat to a polyurethane polymer product demonstrating properties particularly desirable

3

for coating applications. The cured products exhibit hardness characteristics which are generally highly satisfactory, yet also have sufficient flexibility as to resist cracking.

The following examples are provided to further illustrate the invention. All parts are by weight unless otherwise specified.

Preparation of polyurethane oligomer

Example 1

To 174 grams (2.0 eq.) of diisocyanate①, 285 grams of styrene, 0.071 grams of hydroquinone and 0.142 grams of 2,6 - di - tertiary - butyl - 4 - methylphenol (BHT) were added dropwise with stirring a mixture of 117.5 grams (0.8 eq.) of a polyether polyol②, 19.2 grams (0.2 eq.) of a chain extender③ and 116 grams (1.0 eq.) of unsaturated monomer④ over a period of 2 hours. The reaction temperature rose from 21° to 36°C, and the mixture was stirred without heating for 2 hours after completion of the addition. At this point, 2.84 grams of catalyst⑤ were added. After stirring without heating for 15 minutes, the reaction mixture was heated to 70°C and was stirred at 70°C for $4\frac{1}{2}$ hours. The product had a viscosity of 5200 cps at 25°C.

①This is a mixture of toluene diisocyanate isomers (80:20 mixture of 2,4/2,6-isomers).

②This is a polyether polyol having a molecular weight of about 650 and an average functionality of about 4.25 and prepared by condensing a sucrose/glycerol mixture with propylene oxide to a final hydroxyl number of about 375.

③Tripropylene glycol.

④Hydroxyethyl acrylate.

⑤This is a 50% stannous octoate in dioctyl phthalate and is a commercial product of Witco Chemical Corporation purchased under the designation "T-10".

Examples 2—10

Additional polyurethane oligomers were prepared employing the same conditions as in Example 1, except that the time was varied for the reaction at 70°C in the final step of the procedure. Different reactants and proportions of reactants were also used. Table I outlines the oligomer compositions prepared according to Examples 2—10.

4

## TABLE I
### Oligomer compositions

| Example | Diisocyanate[1] (eq.) | Polyether polyol (eq.) | | Chain extender (eq.) | | Unsaturated monomer (eq.) | | | Viscosity (cps at 25°C) | Reaction time at 70°C (hrs.) |
|---|---|---|---|---|---|---|---|---|---|---|
| | | A[2] | B[3] | C[4] | D[5] | E[6] | F[7] | G[8] | | |
| 1 | 2.0 | 0.8 | — | 0.2 | — | 1.0 | — | — | 5200 | 4-1/2 |
| 2 | 2.0 | — | 0.6 | 0.4 | — | — | 1.0 | — | 4000 | 3-1/2 |
| 3 | 2.0 | — | 0.2 | 0.6 | 0.2 | 0.5 | 0.5 | — | 640 | 4 |
| 4 | 2.0 | 0.2 | — | 0.8 | — | — | 1.0 | — | 650 | 10 |
| 5 | 2.0 | 0.6 | — | 0.2 | 0.2 | — | 1.0 | — | 3300 | 5 |
| 6 | 2.0 | 0.8 | — | 0.15 | 0.05 | 0.5 | 0.5 | — | 5350 | 7-1/2 |
| 7 | 2.0 | 0.1 | 0.1 | — | 0.8 | — | 1.0 | — | 350 | 6-1/2 |
| 8 | 2.0 | 0.8 | — | 0.2 | — | — | — | 1.0 | 355 | 5-1/2 |
| 9 | 2.0 | 0.2 | — | 0.8 | — | — | — | 1.0 | 500 | 7 |
| 10 | 2.0 | — | 0.2 | 0.8 | — | 1.0 | — | — | — | 3-1/2 |

[1] The diisocyanate is a mixture of toluene diisocyanate isomers (80:20 mixtures of 2,4/2,6-isomers).

[2] A polyether polyol having a molecular weight of about 650 and an average functionality of about 4.25 and prepared by condensing a sucrose/glycerol mixture with propylene oxide to a final hydroxyl number of about 375.

[3] A polyether polyol having a molecular weight of about 480 and an average functionality of about 4.54 and prepared by condensing a sucrose/glycerol mixture with propylene oxide to a final hydroxyl number of about 530.

[4] Tripropylene glycol.

[5] A polyether polyol having a molecular weight of about 425 and prepared by condensing propylene glycol with propylene oxide to a final hydroxyl number of about 265.

[6] Hydroxyethyl acrylate.

[7] Hydroxypropyl acrylate.

[8] Hydroxyethyl methacrylate.

Preparation of polyurethane moldings

Examples 11—19

Test panels were prepared containing polyurethane oligomers prepared according to Examples 1—9. The following procedure was followed in the preparation of the cured panels.

(a) The polyurethane oligomer was mixed with a free radical generating catalyst①, and the resulting mixture was degassed by placement in a vacuum desiccator at about 1—10 torr pressure for approximately 1—2 minutes or until initial foaming subsided.

(b) The degassed mixture was poured into a mold formed by glass plates coated with a liquid mold release agent, such as "MR515" commercially available from Greenchem Products, Inc., and held apart by one-sixteenth inch spacers.

(c) The mold was then placed in an oven at 120°C for 1 hour.

The physical properties of panels prepared in this manner are included in Table II below. The physical properties were determined in accordance with standard test procedures: Flexural modulus and flexural strength — ASTM D790; tensile strength and elongation — ASTM D3574; and izod — ASTM D256. The barcol hardness was determined by using a Colman Model GYZJ 934-1 Impressor.

① The panels were prepared using 0.5% tertiary butyl peroctoate (commercially available from Lupersol Co. under the designation "PDO", understood to consist of 50% tertiary butyl peroctoate and 50% dioctyl phthalate) and 0.5% tertiary butyl perbenzoate as initiator.

Comparative Example 1

For purposes of comparison, a test panel containing a polyester resin was prepared following the procedure of Examples 11—19. In forming the panel, in place of a polyurethane oligomer of Examples 1—9, there was employed a vinyl ester resin commercially available from Dow Chemical Company under the designation "Derakane 470".

The physical properties of the panel prepared in this manner are included in Table II below. The physical properties were determined in accordance with standard test procedures: Flexural modulus and flexural strength — ASTM D790; tensile strength and elongation — ASTM D3574; and izod — ASTM D256. The Barcol hardness was determined by using a Colman Model GYZJ 934-1 Impressor.

In comparing the results, the panels prepared from polyurethane oligomers of the invention showed overall properties at least comparable to, or better than, those demonstrated by the panel made from the vinyl ester. In particular, these panels exhibited improved elongation values, indicating desirable flexibility and toughness characteristics. These properties are important in coating applications where crack resistance is generally sought.

TABLE II
Physical properties of polyurethane oligomer castings

| Example | Oligomer | Tensile strength (psi) | Elongation (%) | Flexural strength (psi) | Flexural modulus × 10^6 (psi) | Izod (ft.-lb./in.) | | Barcol hardness |
|---|---|---|---|---|---|---|---|---|
| | | | | | | Notched | Unnotched | |
| 11 | Example 1 | 9770 | 4.39 | 17750 | 0.544 | 2.29 | 4.45 | 38 |
| 12 | Example 2 | 7000 | 2.92 | 15760 | 0.567 | 2.80 | 4.46 | 42 |
| 13 | Example 3 | 9620 | 4.04 | 18300 | 0.541 | 3.90 | 5.41 | 39 |
| 14 | Example 4 | 10300 | 4.65 | 18600 | 0.544 | 2.23 | 4.97 | 41 |
| 15 | Example 5 | 10200 | 4.58 | 17300 | 0.505 | 2.37 | 4.44 | 34 |
| 16 | Example 6 | 10000 | 4.39 | 17600 | 0.521 | 3.04 | 5.01 | 40 |
| 17 | Example 7 | 9500 | 4.35 | 14500 | 0.466 | 2.32 | 5.96 | 25 |
| 18 | Example 8 | 11680 | 5.29 | 18000 | 0.518 | 2.28 | 4.36 | 38 |
| 19 | Example 9 | 10500 | 4.61 | 19800 | 0.572 | 2.25 | 5.42 | 43 |
| CE-1 | — | 6680 | 3.02 | 16600 | 0.585 | 2.75 | 3.68 | 46 |

In recent years, there has been a steady increase in the use of reinforced plastic materials for exterior components in automotive construction. Further increases in the utilization of plastics can be expected as automobile manufacturers continue to strive to meet vehicle weight reduction goals.

In the area of rigid plastic automotive components, fiberglass reinforced thermosetting polyester resins have been extensively employed. This can be attributed to their overall physical capabilities (e.g., dimensional stability, strength, high temperature resistance and paint adhesion). Other advantages include facility of handling and machining. However, these polyester systems still present certain deficiencies such as a brittle nature, which can lead to severe impact and fatigue problems. There is also a need to improve surface characteristics and shrinkage control.

To overcome these problems, various additives have been introduced into polyester sheet molding compounds (SMC) and bulk molding compounds (BMC). For example, in U.S. Patent No. 4,020,036 issued to Aubrey South, Jr. on April 26, 1977, liquid polymers, such as polybutadiene, are added in order to toughen polyester products. However, since these materials are not inherently compatible with polyester, these additives cannot be added to the polyester until it is time to mix the resin with the fiberglass. Saturated diacids or long-chain glycols also have been used in preparing polyester resins; the resulting products have been flexibilized, but, at the cost of lower mechanical and thermal properties.

Another approach involves the introduction of polyurethane systems into polyester resins. In U.S. Patent No. 4,062,826 issued to Francis Gowland Hutchinson et al. on December 13, 1977, precursors of a cross-linked polyurethane are polymerized within a mixture of ethylenically unsaturated polyester and vinyl monomer to form a product with an interpenetrating polyurethane gel network within the polyester cross-linked structure. While higher impact properties are reported to be achieved, the fine surface finish required for automotive body part applications is not accomplished. See Forger, G., *Toughened SMC*, Plastics World, page 63 (June 1978).

Now, according to a further aspect of the present invention, it has been discovered that these requirements can be achieved by employing a select polyurethane system which includes a select polyurethane oligomer as previously described, a free radical generating catalyst and at least one additional component selected from a reinforcing agent and a filler. In the practice of the invention, a molded plastic product is produced which features desirable impact properties and is suitable for many of the same utilities as thermoset polyester resin compositions such as parts for automotive body applications.

The composition of this aspect of the invention also contains at least one of a filler or a reinforcement material. In particularly preferred embodiments of the invention, both filler and reinforcement material are included in the formulation. Any material known to those in the art as being suitable as a filler may be employed. Generally, a variety of materials, e.g., finely divided solids including $CaCO_3$, clay, alumina, talc and glass microspheres, may be utilized. Also, any suitable reinforcement material may be used, such as chopped fiberglass, carbon fibers, asbestos fibers and boron nitride whiskers. The amount of filler generally included in the formulation may vary considerably, but usually ranges from 20 to 400 parts, and preferably from 100 to 220 parts, per 100 parts by weight of the polyurethane oligomer. When a reinforcing agent is added to the formulation, the amount may also vary over a wide range; however, a typical formulation will generally contain from 10 to 150 parts, and preferably from 60 to 130 parts, per 100 parts by weight of the polyurethane oligomer.

The composition also may include other standard ingredients, if desired, such as internal mold release agents, e.g., calcium, zinc, magnesium, or sodium stearate. Low shrink or impact additives also may be included, if desired. Pigments, dyes, stabilizers, viscosity modifiers (e.g., Group II metal oxides and hydroxides, such as magnesium oxide) and various other additives familiar to those skilled in thermosetting polyester technology also may be added.

By way of illustration, all the ingredients of the composition, except filler and/or reinforcing material, are mixed, usually in a high shear mixing device. The filler, if employed, is then added gradually to the mixture and mixed until a homogeneous paste is obtained. Reinforcing agent, such as chopped glass, is then added gradually to the paste and the paste is worked so as to achieve good glass wet-out. The resulting uncured mix is then cured under elevated temperature and pressure conditions as is well known to those skilled in the art. Upon cure, a polyurethane polymer product demonstrating desirable impact and strength properties is obtained.

The following examples are provided to further illustrate the invention. All parts are by weight unless otherwise specified.

Preparation of polyurethane moldings
Examples 20—25

Test panels were prepared containing polyurethane oligomers prepared according to Examples 2, 4—7 and 10. The molding formulation used is listed in Table III below. The following procedure was followed in the preparation of the cured composites.

(a) Into a high shear mixing device were added to the polyurethane oligomer, styrene, other monomers, catalyst and pigments.

(b) The filler was added gradually and mixed until a homogeneous paste was achieved.

(c) Next chopped fiberglass was added gradually to the paste in a two-roll mill and the mix was worked the minimal length of time to achieve good wet out of the glass without significant breakdown.

(d) The uncured mix was then placed in a mold between the platens of a compression molding machine and cured under pressure (2,000 psi) for three minutes at 300—325°F.

(e) Alternatively to (d), the mixture may be added by a hopper device to the screw system of an injection molding device to produce an injection molded part, or the mix may be made up on an SMC machine for later compression or injection molding.

The physical properties of panels prepared in this manner are included in Table IV below. The physical properties were determined in accordance with standard test procedures: Flexural modulus and flexural strength — ASTM D790; tensile strength and elongation — ASTM D3574; and falling dart impact — ASTM D3029.

### TABLE III
### Polyurethane molding formulation (BMC)

| Component | Parts by weight |
| --- | --- |
| Polyurethane Oligomer | 100 (40% Styrene) |
| Tertiary Butyl Perbenzoate | 1.4 |
| Tertiary Butyl Peroctoate① | 0.5 |
| Zinc Stearate | 4.3 |
| Calcium Carbonate | 160 |
| $\frac{1}{2}$ Inch Glass | 99 |

① Commercially available from Lupersol Co. under the designation "PDO", understood to consist of 50% tertiary butyl peroctoate and 50% dioctyl phthalate.

Comparative Example 2

For purposes of comparison, a test panel containing a polyester resin was prepared following the procedure of Examples 20—25. The molding formulation employed was as follows:

| Component | Parts by weight |
| --- | --- |
| Polyester Resin① | 100 (36% Styrene) |
| Tertiary Butyl Perbenzoate | 1.4 |
| Tertiary Butyl Peroctoate② | 0.5 |
| Zinc Stearate | 4.3 |
| Calcium Carbonate | 160 |
| $\frac{1}{2}$ Inch Glass | 99 |

① A vinyl ester resin commercially available from Dow Chemical Company under the designation "Derakane 470".

② Commercially available from Lupersol Co. under the designation "PDO", understood to consist of 50% tertiary butyl peroctoate and 50% dioctyl phthalate.

The physical properties of the panel prepared in this manner are included in Table III below. The physical properties were determined in accordance with standard test procedures: Flexural modulus and flexural strength — ASTM D790; tensile strength and elongation — ASTM D3574; and falling dart impact — ASTM D3029.

In comparing the results, the composites prepared from polyurethane oligomers of the invention showed overall properties generally improved over those demonstrated by the composite made from the conventional vinyl ester. These composites exhibited desirable impact properties, and enhanced flexural strength and modulus, the latter characteristics indicating improved strength, which is particularly important for automotive body applications.

TABLE IV
Physical properties of polyurethane oligomer composites

| Example | Polyurethane oligomer | Tensile strength (psi) | Flexural strength (psi) | Flexural modulus×$10^6$ (psi) | Elongation (%) | Falling dart impact (in.-lb.) |
|---|---|---|---|---|---|---|
| 20 | Example 2 | 5500 | 12,700 | 1.10 | 1.63 | 24 |
| 21 | Example 4 | 3950 | 14,600 | 1.28 | 1.26 | 30 |
| 22 | Example 5 | 5500 | 14,100 | 1.18 | 1.46 | 27 |
| 23 | Example 6 | 3950 | 12,300 | 1.18 | 1.37 | 30 |
| 24 | Example 7 | 4750 | 14,600 | 1.22 | 1.33 | 27 |
| 25 | Example 10 | 5230 | 13,800 | 1.11 | 1.47 | 29 |
| CE-2 | — | 4700 | 10,500 | 0.98 | 1.16 | 27 |

# 0 076 126

## Claims

1. A polyurethane liquid polymer composition comprising a polyurethane oligomer and a heat activatable free radical generating catalyst, said polyurethane oligomer having terminal ethylenic unsaturation and an equivalent ratio of NCO to OH from 0.8/1 to 2/1 and being prepared by simultaneously reacting

(a) an organic polyisocyanate;

(b) a polyether polyol having an average equivalent weight of 75 to 500 and an average functionality of at least 3; and

(c) an isocyanate reactive group-containing terminally unsaturated monomer selected from
   (i) (meth)acrylates,
   (ii) unsaturated amides, and
   (iii) mixtures thereof;

wherein there is employed an equivalent ratio of said isocyanate reactive group-containing unsaturated monomer to said polyol in the range from 0.6/1 to 25/1.

2. The composition of claim 1, which includes a copolymerizable solvent.

3. The composition of claim 2, wherein said copolymerizable solvent is styrene.

4. The composition of claim 1, 2 or 3, wherein said polyurethane oligomer has an equivalent ratio of NCO to OH from 1/1 to 1.2/1.

5. The composition of claim 1, 2, 3 or 4, wherein said equivalent ratio of said isocyanate reactive group-containing unsaturated monomer to said polyol is in the range from 0.8/1 to 10/1.

6. The composition of any preceding claim, wherein said unsaturated monomer is selected from hydroxyethyl acrylate, hydroxypropyl acrylate, hydroxyethyl methacrylate, hydroxyethyl acrylamide, hydroxypropyl acrylamide, t-butylaminoethyl methacrylate, and mixtures thereof.

7. The composition of claim 6, wherein said unsaturated monomer is selected from hydroxyethyl acrylate, hydroxypropyl acrylate, hydroxyethyl methacrylate, and mixtures thereof.

8. The composition of any preceding claim, wherein said heat activated free radical generating catalyst is a peroxide catalyst.

9. The composition of claim 8, wherein said peroxide catalyst is selected from t-butyl perbenzoate, t-butyl peroctoate, and mixtures thereof.

10. The composition of any preceding claim, wherein said polyol has an average equivalent weight of 100 to 200 and an average functionality of 4 to 6 and is prepared by reacting a polyhydric initiator selected from mixtures of sucrose, dextrose or methyl glucoside and an aliphatic triol with an alkylene oxide selected from propylene oxide and mixtures of propylene oxide and ethylene oxide.

11. The composition of any preceding claim, wherein said polyurethane oligomer further comprises a chain extending agent.

12. The composition of claim 11, wherein said chain extending agent is selected from tripropylene glycol, a polyol having an average equivalent weight in the range from 200 to 4,000 and an average functionality of about 2, and mixtures thereof.

13. The composition of any preceding claim, wherein said organic polyisocyanate comprises toluene diisocyanate.

14. The composition of any preceding claim, which includes at least one additional component selected from a reinforcing agent and a filler.

15. The composition of claim 14, which includes 60 to 130 parts by weight of a reinforcing agent per 100 parts by weight of said polyurethane oligomer and 100 to 220 parts by weight of a filler per 100 parts by weight of said polyurethane oligomer.

16. A process for preparing a polyurethane polymer product comprising mixing a polyurethane oligomer and a heat activatable free radical generating catalyst, and then heating said mixture at a temperature adequate to activate said catalyst and cure said mixture, said polyurethane oligomer having terminal ethylenic unsaturation and an equivalent ratio of NCO to OH from 0.8/1 to 2/1 and being prepared by simultaneously reacting

(a) an organic polyisocyanate;

(b) a polyether polyol having an average equivalent weight of 75 to 500 and an average functionality of at least 3; and

(c) an isocyanate reactive group-containing unsaturated monomer selected from
   (i) (meth)acrylates,
   (ii) unsaturated amides, and
   (iii) mixtures thereof; and

wherein there is employed an equivalent ratio of said isocyanate reactive group-containing unsaturated monomer to said polyol in the range from 0.6/1 to 25/1.

17. The process of claim 16, wherein said polyurethane oligomer has an equivalent ratio of NCO to OH from 1/1 to 1.2/1 and is prepared by simultaneously reacting:

(a) toluene diisocyanate;

(b) a polyether polyol having an average equivalent weight of 100 to 200 and an average functionality of 4 to 6 and prepared by reacting a polyhydric initiator selected from mixtures of sucrose, dextrose or

11

# 0 076 126

methyl glucoside and an aliphatic triol with an alkylene oxide selected from propylene oxide and mixtures of propylene oxide and ethylene oxide; and

(c) an isocyanate-reactive group-containing unsaturated monomer selected from hydroxyethyl acrylate, hydroxypropyl acrylate, hydroxyethyl methacrylate, and mixtures thereof; and

wherein said equivalent ratio of said isocyanate reactive group-containing unsaturated monomer to said polyol is in the range from 0.8/1 to 10/1.

18. The process of claim 17, wherein said polyurethane oligomer is prepared by carrying out said reaction in the presence of styrene copolymerizable solvent and by accelerating said reaction by employing a urethane catalyst.

19. The process of claim 16, 17 or 18 wherein said mixture includes at least one additional component selected from a reinforcing agent and a filler.

20. A polyurethane polymer product which has been prepared by heating curing the composition of any one of claims 1—15.

**Patentansprüche**

1. Flüssige Polyurethanpolymermasse mit einem Polyurethanoligomer und einem wärmeaktivierbaren, freie Radikale erzeugenden Katalysator, wobei das Polyurethanoligomer ein äthylenisch ungesättigte Endgruppe und ein Äquivalentverhältnis von NCO zu OH von 0,8/1 bis 2/1 hat und durch gleichzeitige Umsetzung

a) eines organischen Polyisocyanats,

b) eines Polyätherpolyols mit einem mittleren Äquivalentgewicht von 75 bis 500 und einer mittleren Funktionalität von wenigstens 3 und

c) eines eine mit Isocyanat reagierende Gruppe enthaltenden, endständig ungesättigten Monomers aus der Gruppe

(i) der (Meth)acrylate,

(ii) ungesättigten Amide und

(iii) Gemische· hiervon

hergestellt ist, worin en Äquivalentverhältnis des eine mit Isocyanat reagierende Gruppe enthaltenden ungesättigten Monomers zu dem Polyol im Bereich von 0,6/1 bis 25/1 verwendet wird.

2. Masse nach Anspruch 1, die ein mischpolymerisierbares Lösungsmittel enthält.

3. Masse nach Anspruch 2, worin das mischpolymerisierbare Lösungsmittel Styrol ist.

4. Masse nach Anspruch 1, 2 oder 3, worin das Polyurethanoligomer ein Äquivalentverhältnis von NCO zu OH von 1/1 bis 1,2/1 hat.

5. Masse nach Anspruch 1, 2, 3 oder 4, worin das Äquivalentverhältnis des eine mit Isocyanat reagierende Gruppe enthaltenden ungesättigten Monomers zu dem Polyol im Bereich von 0,8/1 bis 10/1 liegt.

6. Masse nach einem der vorausgehenden Ansprüche, in der das ungesättigte Monomer aus Hydroxyäthylacrylat, Hydroxypropylacrylat, Hydroxyäthylmethacrylat, Hydroxyäthylacrylamid, Hydroxypropylacrylamid, t-Butylaminoäthylmethacrylat und Gemischen hiervon ausgewählt ist.

7. Masse nach Ansrpuch 6, in der das ungesättigte Monomer aus Hydroxyäthylacrylat, Hydroxypropylacrylat, Hydroxyäthylmethacrylat und Gemischen hiervon ausgewählt ist.

8. Masse nach einem der vorausgehenden Ansprüche, worin der wärmeaktivierte, freie Radikale erzeugende Katalysator ein Peroxidkatalysator ist.

9. Masse nach Anspruch 8, in der der Peroxidkatalysator aus t-Butylperbenzoat, t-Butylperoctoat und Gemischen hiervon ausgewählt ist.

10. Masse nach einem der vorausgehenden Ansprüche, worin das Polyol ein mittleres Äquivalentgewicht von 100 bis 200 und eine mittlere Funtionalität von 4 bis 6 hat und durch Umsetzung eines mehrwertigen Initiators, der aus Gemischen von Saccharose, Dextrose oder Methylglycosid ausgewählt ist, und eines aliphatischen Triols mit einem Alkylenoxid, der unter Propylenoxid und Gemischen von Propylenoxid und Äthylenoxid ausgewählt ist, hergestellt ist.

11. Masse nach einem der vorausgehenden Ansprüche, worin das Polyurethanoligomer außerdam ein Kettenverlängerungsmittel aufweist.

12. Masse nach Anspruch 11, worin das Kettenverlängerungsmittel aus Tripropylenglycol, einem Polyol mit einem mittleren Äquivalentgewicht im Bereich von 200 bis 4000 und einer mittleren Funktionalität von etwa 2 sowie Gemischen hiervon ausgewählt ist.

13. Masse nach einem der vorausgehenden Ansprüche, worin das organische Polyisocyanat Toluoldiisocyanat umfaßt.

14. Masse nach einem der vorausgehenden Ansprüche, die wenigstens eine zusätzliche Komponente enthält, die aus Verstärkungsmitteln und Füllstoffen ausgewählt ist.

15. Masse nach Anspruch 14, die 60 bis 130 Gewichtsteile eines Verstärkungsmittels je 100 Gewichtsteile des Polyurethanoligomers und 100 bis 220 Gewichtsteile eines Füllstoffes je 100 Gewichtsteile des Polyurethanoligomers enthält.

16. Verfahren zur Herstellung eines Polyurethanpolymerproduktes durch Vermischen eines Polyurethanoligomers und eines wärmeaktivierbaren, freie Radikale erzeugenden Katalysators und anschließendes Erhitzen dieses Gemisches auf eine geeignete Temperatur, um den Katalysator zu aktivieren und das Gemisch zu härten, wobei das Polyurethanoligomer eine äthylenisch ungesättigte Endgruppe und ein Äquivalentgewicht von NCO zu OH von 0,8/1 bis 2/1 hat und durch gleichzeitige Umsetzung

a) eines organischen Polyisocyanats,

b) eines Polyätherpolyols mit einem mittleren Äquivalentgewicht von 75 bis 500 und einer mittleren Funktionalität von wenigstens 3 und

c) eines eine mit Isocyanat reagierende Gruppe enthaltenden ungesättigten Monomers, das aus
(i) (Meth)acrylaten,
(ii) ungesättigten Amiden und
(iii) Gemischen hiervon
ausgewählt ist, hergestellt ist, wobei ein Äquivalentverhältnis des eine mit Isocyanat reagierende Gruppe enthaltenden ungesättigten Monomers zu dem Polyol im Bereich von 0,6/1 bis 25/1 verwendet wird.

17. Verfahren nach Anspruch 16, bei dem das Polyurethanoligomer ein Äquivalentverhältnis von NCO zu OH von 1/1 bis 1,2/1 hat und durch gleichzeitige Umsetzung

a) von Toluoldiisocyanat,

b) eines Polyätherpolyols mit einem mittleren Äquivalentgewicht von 100 bis 200 und einer mittleren Funktionalität von 4 bis 6, das durch Umsetzung eines mehrwertigen Initiators, der aus Gemischen von Saccharose, Dextrose oder Methylglucosid ausgewählt ist, und eines aliphatischen Triols mit einem Alkylenoxid, das aus Propylenoxid und Gemischen von Propylenoxid und Äthylenoxid ausgewählt ist, hergestellt wurde, und

c) eines eine mit Isocyanat reagierende Gruppe enthaltenden ungesättigten Monomers, das aus Hydroxyäthylacrylat, Hydroxypropylacrylat, Hydroxyäthylmethacrylat und Gemischen hiervon ausgewählt ist,
hergestellt ist, worin das Äquivalentverhältnis des eine mit Isocyanat reagierende Gruppe enthaltenden ungesättigten Monomers zu dem Polyol im Bereich von 0,8/1 bis 10/1 liegt.

18. Verfahren nach Anspruch 17, bei dem das Polyurethanoligomer unter Durchführung der Reaktion in Gegenwart von mit Styrol mischpolymerisierbarem Lösungsmittel und durch Beschleunigung der Umsetzung durch Verwendung eines Urethankatalysators hergestellt wird.

19. Verfahren nach Anspruch 16, 17 oder 18, bei dem das Gemisch wenigstens eine zusätzliche Komponente, die unter Verstärkungsmittel und Füllstoffen ausgewählt ist, enthält.

20. Polyurethanpolymerprodukt, das durch Wärmehärtung der Zusammensetzung nach einem der Ansprüche 1 bis 15 hergestellt wurde.

## Revendications

1. Composition polymère liquide à base de polyuréthanne comprenant un oligomère de polyuréthanne et un catalyseur produisant des radicaux libres, activable à la chaleur, ledit oligomère de polyuréthanne possédant une insaturation éthylénique terminale et un rapport équivalent NCO/OH de 0,8/1 à 2/1, et étant préparé par la réaction simultanée

(a) d'un polyisocyanate organique;

(b) d'un polyéther-polyol ayant un poids équivalent moyen de 75 à 500 et une fonctionnalité moyenne d'au moins 3; et

(c) d'un monomère à insaturation terminale contenant un groupe réagissant sur les isocyanates, choisi parmi

(i) les (méth)acrylates,
(ii) les amides insaturés, et
(iii) leurs mélanges;
où on utilise un rapport équivalent entre ledit monomère insaturé contenant un groupe réagissant sur les isocyanates et ledit polyol compris entre 0,6/1 et 25/1.

2. Composition selon la revendication 1, qui comprend un solvant copolymérisable.

3. Composition selon la revendication 2, dans laquelle ledit solvant copolymérisable est le styrène.

4. Composition selon la revendication 1, 2 ou 3, dans laquelle ledit oligomère de polyuréthanne possède un rapport équivalent NCO/OH de 1/1 à 1,2/1.

5. Composition selon la revendication 1, 2, 3 ou 4, dans laquelle ledit rapport équivalent entre ledit monomère insaturé contenant un groupe réagissant sur les isocyanates et ledit polyol est compris entre 0,8/1 et 10/1.

6. Composition selon l'une quelconque des revendications précédentes, dans laquelle ledit monomère insaturé est choisi entre l'acrylate d'hydroxyéthyle, l'acrylate d'hydroxypropyle, le méthacrylate d'hydroxyéthyle, l'hydroxyéthylacrylamide, l'hydroxypropylacrylamide, le méthacrylate de tert-butylaminoéthyle, et leurs mélanges.

7. Composition selon la revendication 6, dans laquelle ledit monomère insaturé est choisi entre l'acrylate d'hydroxyéthyle, l'acrylate d'hydroxypropyle, le méthacrylate d'hydroxyéthyle et leurs mélanges.

8. Composition selon l'une quelconque des revendications précédentes, dans laquelle ledit catalyseur produisant des radicaux libres, activé par la chaleur, est un catalyseur à base de peroxydes.

13

9. Composition selon la revendication 8, dans laquelle ledit catalyseur à base de peroxydes est choisi entre le perbenzoate de tert-butyle, le peroctoate de tert-butyle et leurs mélanges.

10. Composition selon l'une quelconque des revendications précédentes, dans laquelle ledit polyol possède un poids équivalent moyen de 100 à 200 et une fonctionnalité moyenne de 4 à 6 et est préparé en faisant réagir un initiateur polyatomique choisi parmi les mélanges de saccharose, de dextrose ou de méthylglucoside, et un triol aliphatique sur un oxyde d'alkylène choisi entre l'oxyde de propylène et les mélanges d'oxyde de propylène et d'oxyde d'éthylène.

11. Composition selon l'une quelconque des revendications précédentes, dans laquelle ledit oligomère de polyuréthanne comprend en outre un agent extendeur de chaîne.

12. Composition selon la revendication 11, dans laquelle ledit agent extendeur de chaîne est choisi entre le tripropylèneglycol, un polyol ayant un poids équivalent moyen compris entre 200 et 4000 et une fonctionnalité moyenne d'environ 2, et leurs mélanges.

13. Composition selon l'une quelconque des revendications précédentes, dans laquelle ledit polyisocyanate organique comprend du diisocyanate de toluène.

14. Composition selon l'une quelconque des revendications précédentes, qui comprend au moins un constituant supplémentaire choisi entre un agent de renforcement et une charge.

15. Composition selon la revendication 14, qui comprend 60 à 130 parties en poids d'un agent de renforcement pour 100 parties en poids dudit oligomère de polyuréthanne et 100 à 220 parties en poids d'une charge pour 100 parties dudit oligomère de polyuréthanne.

16. Procédé pour la préparation d'un produit polymère polyuréthanne consistant à mélanger un oligomère de polyuréthanne et un catalyseur produisant des radicaux libres, activable à la chaleur, puis à chauffer ledit mélange à une température convenant à l'activation dudit catalyseur et au durcissement dudit mélange, ledit oligomère de polyuréthanne ayant une insaturation éthylénique terminale et un rapport équivalent NCO/OH compris entre 0,8/1 et 2/1 et étant préparé par la réaction simultanée

(a) d'un polyisocyanate organique;

(b) d'un polyéther-polyol ayant un poids équivalent moyen de 75 à 500 et une fonctionnalité moyenne d'au moins 3; et

(c) d'un monomère insaturé contenant un groupe réagissant sur les isocyanates, choisi entre

(i) les (méth)acrylates,

(ii) les amides insaturés, et

(iii) leurs mélanges; et

dans laquel on utilise un rapport équivalent compris entre 0,6/1 et 25/1 entre ledit monomère insaturé contenant un groupe réagissant sur les isocyanates et ledit polyol.

17. Procédé selon la revendication 16, dans lequel ledit oligomère de polyuréthanne a un rapport équivalent NCO/OH de 1/1 à 1,2/1 et est préparé par la réaction simultanée

(a) de diisocyanate de toluène;

(b) d'un polyéther-polyol ayant un poids équivalent moyen de 100 à 200 et une fonctionnalité moyenne de 4 à 6 et préparé en faisant réagir un initiateur polyvalent choisi parmi les mélanges de saccharose, dextrose ou méthylglycoside, et un triol aliphatique, sur un oxyde d'alkylène choisi entre l'oxyde de propylène et les mélanges d'oxyde de propylène et d'oxyde d'éthylène; et

(c) d'un monomère insaturé contenant un groupe réagissant sur les isocyanates, choisi entre l'acrylate hydroxyéthyle, l'acrylate d'hydroxypropyle, le méthacrylate d'hydroxyéthyle et leurs mélanges; et dans lequel ledit rapport équivalent entre le monomère insaturé contenant un groupe réagissant sur les isocyanates et ledit polyol est compris entre 0,8/1 et 10/1.

18. Procédé selon la revendication 7, dans lequel on prépare ledit oligomère de polyuréthanne en effectuant ladite réaction en présence d'un solvant copolymérisable de styrène et en accélérant ladite réaction en utilisant un catalyseur à base d'uréthanne.

19. Procédé selon la revendication 16, 17 ou 18, dans lequel ledit mélange comprend au moins un constituant supplémentaire choisi entre un agent de renforcement et une charge.

20. Produit polymère polyuréthanne qui a été préparé par durcissement, à la chaleur, de la composition selon l'une quelconque des revendications 1—15.

14